# EUROPEAN PATENT SPECIFICATION

(11) **EP 3 400 383 B1**
(45) Date of publication and mention of the grant of the patent: **08.01.2020**
(21) Application number: 16808823.5
(22) Date of filing: 11.11.2016
(51) Int. Cl.: F03B 13/26

(54) **TIDAL POWERPLANT**
GEZEITENKRAFTWERK
USINE MARÉMOTRICE

(30) Priority: 08.01.2016 NO 20160036
(43) Date of publication of application: 14.11.2018
(73) Proprietor: Norway Tide Power AS, 5527 Haugesund (NO)
(72) Inventor: WEE, Gustav, 5527 Haugesund (NO)
(74) Representative: Protector IP AS
(86) International application number: PCT/NO2016/050227
(87) International publication number: WO 2017/119816

(56) References cited:
- WO-A1-98/20254
- WO-A1-2009/049269
- WO-A2-2005/069824
- US-A1- 2008 197 632
- US-B1- 7 075 190

## Description

The present invention relates to power plants using tidal power or the water high difference between high tide and low tide and trap air for compression and generate power supply. More specifically, it relates to offshore power generating assemblies using tidal power as source of energy.

Many places in the world there is a considerable difference lift of tide, with a the sea level difference between ebb and flow of several meters. The object of the invention is to use the flow or higher tide and low tide to generate power.

The present invention thereby relates to a floating unit that will float on the sea and follow the tides up and down. The lifting and lowering of the floating unit is then used to compress air. The surface of the floating unit can be provided with various functionalities such as wind mills, a small floating town, etc. A number of generators are provided on the floating unit or in the vicinity to the floating unit, that will generate power as will be described below. The amount of power to be obtained will be defined by the amount and size of the floating unit lift and weight and the numbers of cylinders and generator units that are used.

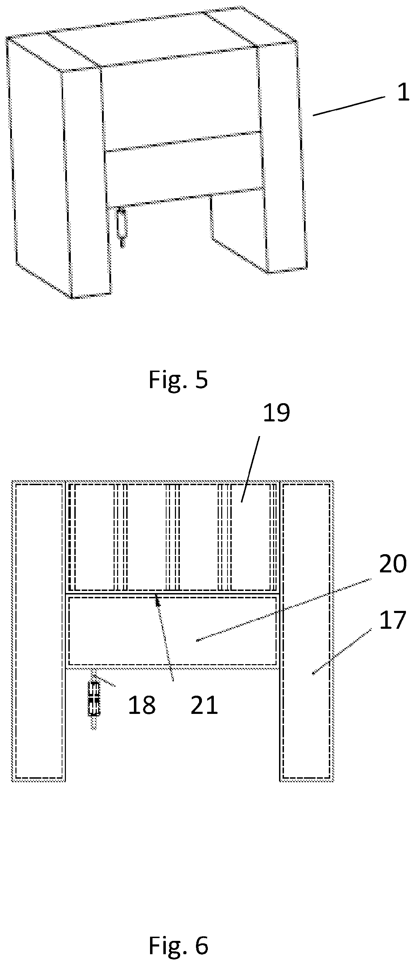

From US 7075190 is known an offshore power generating assembly comprising a floating unit, at least one generator, a base connected to the seabed below the floating unit and a number of cylinders (fig. 6) comprising a pair of cylinder spindles, the cylinders being connected to the floating unit and the base so that fluid is compressed by the cylinders during tidal changes, the compressed fluid providing power to the at least one generator.

However, this known device has a number of drawbacks. At the turn of the tide there will be no power generation as the floting unit will move very little or not at all. It is not possible to adapt an already manufactured device to the prevailing amplitude of the installation site. If the device is moved from a site with a small amplitude to a site with a larger amplitude, the stroke of the cylinders may be too short to take advantage of the larger amplitude. Longer cylinders may be too long of moved to a shallower depth. Sideways movement of the floating unit will either impose high tension on the connection of the cylinders with the seabed or reduce the available stroke of the cylinders.

US 2008/0197632 shows a wave power device with single acting air cylinders. Also this device cannot readily be adapted to the prevailing tidal amplitude or depth.

Other prior art is shown in WO 98/20254, WO 2009/049269 and WO 2005/069824.

The problems associated with the prior art are solved by the invention according to claim 1.
Fig. 1 shows an assembly according to the invention.
Fig. 2 shows a perspective view of a base plate suitable for use with an assembly according to the invention.
Fig. 3 shows a sectional top view along A-A in fig. 2.
Figs. 4a-c show different views of a cylinder suitable for use with an assembly according to the invention.
Fig. 5 shows a perspective view of the basic structure of a floating unit.
Fig. 6 shows a sectional side view of the floating unit in fig. 5.
Fig. 7 shows a perspective sectional view of a technical room.
Fig. 8 shows a perspective view of the upper part of the floating unit.

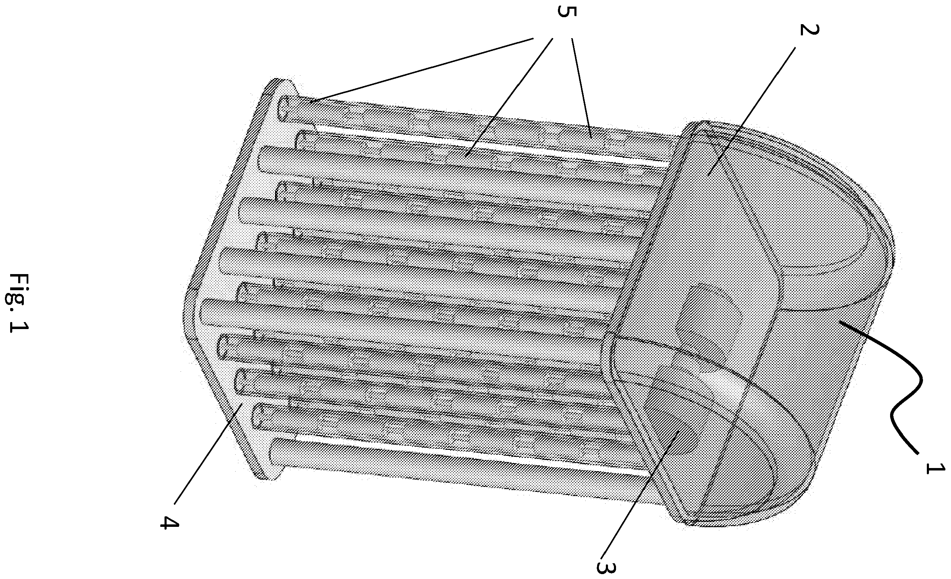

Fig. 1 shows an assembly according to the invention. The assembly comprises a floating unit 1 being provided with a deck 2 where one or more generators 3 is placed. A base 4 is securely attached to the sea bed below the floating unit 1. A number of cylinders 5 are connected to the floating unit 1 and the base 4. The floating unit can be connected to the sea bed to provide additional support against oceanic currents, or be self-contained if it is used in shallow water. There can be a frame or guides around with a deck and the floating unit arranged in the middle. Then the frame can be set on the sea bed and the cylinders are fitted to the frame deck.

There can be protective arrangements around the cylinders to prevent wear and damages to the cylinders and ensure that the cylinders are maintained in stable position in relation to each other. The protective arrangements can be tubular elements as shown in figure 1, a framework around two or more of the cylinders or stiffener elements connecting cylinders to each other.

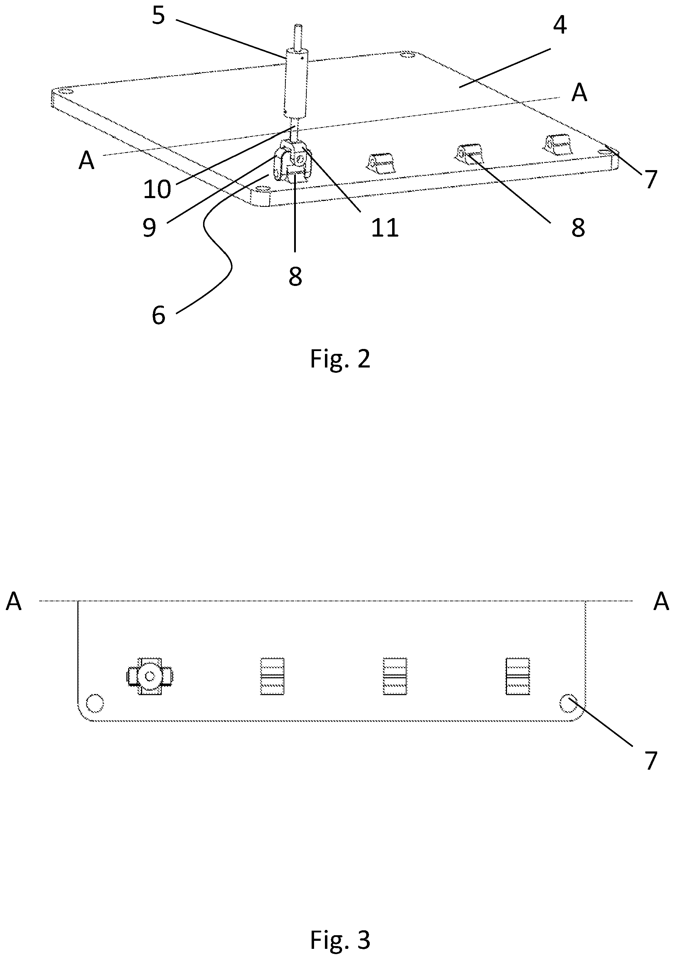

Fig. 2 shows a perspective of a partly equipped base plate 4 with flexible cylinder joints 6 suitable for use with an assembly according to the invention. A number of cylinder joints 6 are arranged over the base plate 4, whereof only four are shown in the figure. The number of joints 6 will correspond to the desired number of cylinders 5. The base plate 4 can be fixed to the sea bed by poles driven through holes 7 in the base plate 4. The base plate can also be fixed by anchoring means being fastened to the base plate and anchored to the sea bed.

The embodied joints comprises an anchoring means 8 provided with a shaft aperture. A first bow shaped connecting element 9 comprising a shaft is arranged around and through the shaft aperture of the anchoring means. A cylinder spindle 10 of the cylinder 5 is provided with a bow shaped end section 11 and shaft. The shaft of the spindle is arranged through the bow shaped element 9. Thereby, the connecting element 9 can pivot in a first direction about the anchoring means 8 on the base plate 4, and the end section 11 of the cylinder spindle will pivot perpendicularly to the connecting element 9 providing full rotational freedom for the cylinder above the base plate. The same principle can be used for the connection of the cylinders to the floating unit.

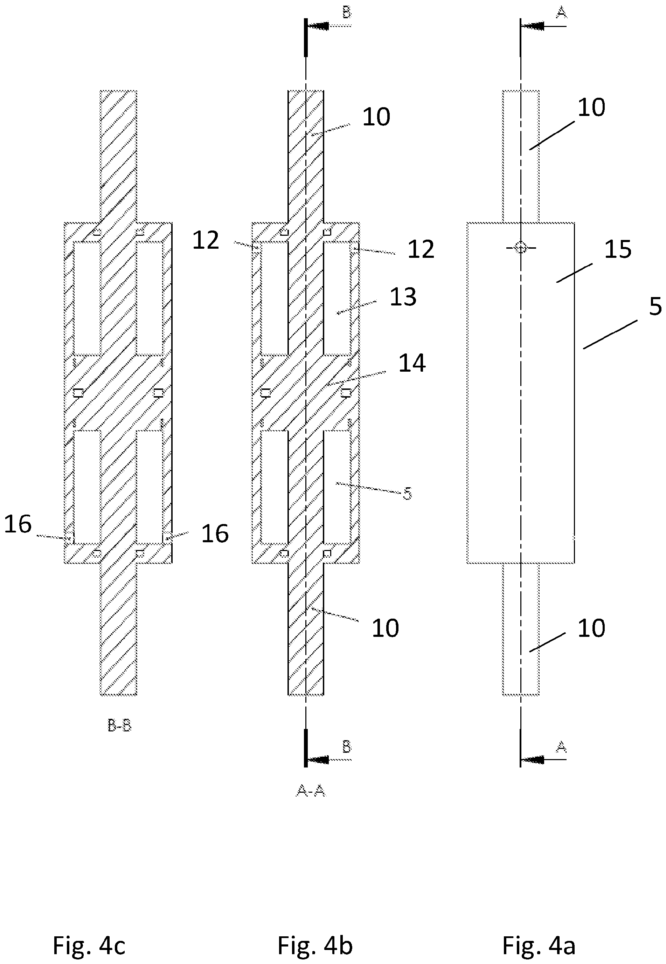

Fig. 4a shows a side view of a cylinder 5 with spindles 10 protruding from both end sections of the cylinder body 15. Fig. 4b is a sectional view through A-A in fig. 4a and fig. 4b is a sectional view through B-B in fig. 4b. The cylinder 5 comprises two annular fluid chambers 13 and a piston 14. The piston 14 separates the upper and lower fluid chambers 13. The cylinder body 15 is provided with upper pressure ports 12 letting out pressurized fluid when the floating unit is lifted and lower pressure ports 16 letting out pressurized fluid when the floating unit is lowered.

Figs. 5 and 6 show the basic structure of a floating unit suitable for use with a tidal power plant. The floating unit comprises buoyancy elements 17 ensuring that the floating unit has sufficient buoyancy to follow the changing surface level of the sea and extract and contract the below arranged cylinders. On the bottom surface of the floating unit there are a number of hook-ups or anchoring means 18 for connection of cylinder spindles. The floating unit is also provided with pressure tanks 19 in fluid connection with the fluid chambers of the cylinders, a technical room 20, and crane and compensators 21 for lifting and lowering of the cylinders.

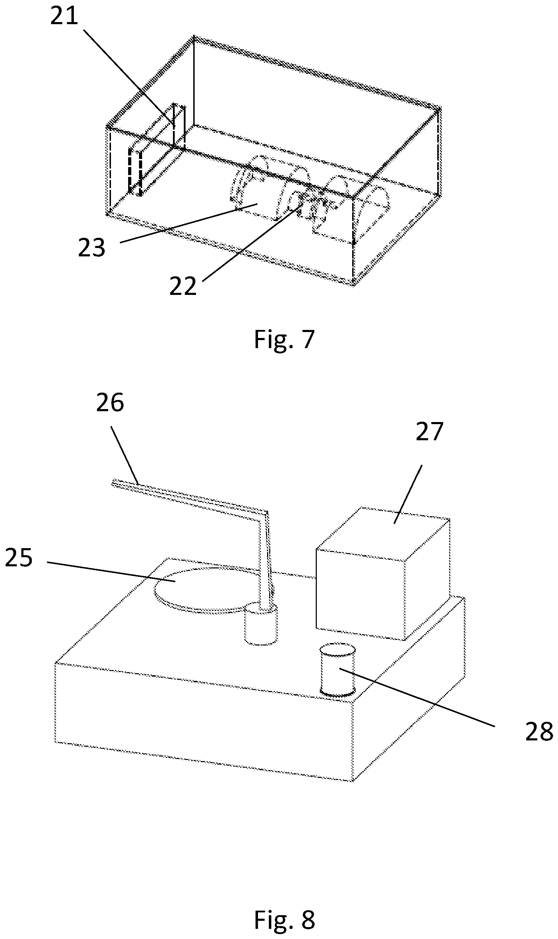

Fig. 7 shows a perspective sectional view showing the principle structure of a technical room 20. The room 20 is provided with at least a control unit 21, pressure turbine 22 and generators 23.

Fig. 8 shows an example of basic structures that can be arranged on the upper part of the floating unit. The floating unit is provided with a helicopter landing stage or helideck 25, a crane 26, personnel unit 27 and mooring unit 28.

The crane 26 covers the whole deck. The personnel unit 27 can contain accommodation units, offices and entrance to other parts of power plant. One or more mooring units can be provided if needed for use in deep water.

When the floating unit is lifted due to rise of tide, the cylinders will compress fluid in the upper part of the piston in the cylinder. When the floating unit is lowered due to falling tide, the cylinders will compress fluid in the lower side of the piston. The basis of the invention is to provide two-way cylinders where fluid is compressed in the cylinders both during compression and expansion. The compressed fluid is then conducted to one or more storage tanks or the compressed power is transferred to a storable medium. The compressed fluid or medium is the channelled to the generator for transferral to electric power.

The assembly will suck and trap air on the way from low to high tide and opposite from high to low tide and compress the air in cylinders and tanks while the low tide is coming. This air will be stored in pressure chambers under the floating system, in the sea or on the sea bed.

Thereby it can be seen that this is a double working unit that utilizes the change from low tide to high tide and from high tide to low tide. This will be a continuous power generating process. The sizing of the assembly will give the limitation for how much power that is generated.

In some embodiments it will be used a large floating object to float up and down with the tide. The cylinders or the air traps that compress the air will be fixedly connected to the sea-bed e.g. by means of a base 4. The amount of air that will be trapped and compressed will be used by an air/gas reservoir for running the power turbines continually. The system or assemble comprise several cylinders sucking and pumping/pressure up the reservoir tanks.

The cylinders and tanks are preferably removable connected to the seabed in a system that is automatic operated, so that each cylinder and tank can be separately released and lifted to the floating unit for maintenance. The floating unit can be adjusted in the sea to different heights to achieve more air in the movement from tide top and bottom. The surface area of the floating unit will set the capacity for the power generation. The floating unit can also utilize wave movement to suck and compress air.

From low tide the floating unit will be lifted up with the sea level whereby the upper chambers 13 of the cylinders are compressed providing pressurised fluid to the turbines thereby generating power during the lift. The lower chambers of the cylinders are refilled with equalised fluid. When the floating unit is lowered from high tide, the lower chambers 13 of the cylinders compressed and pressurized fluid is let out to the pressure tanks, while the upper chambers are refilled with equalised fluid. This will provide a continuous supply of compressed fluid for running the power generators.

On the top is also envisage ably to utilize the wind power with at wind mill, and also sun for power generation as there will be a large accessible surface on the floating unit 1 for power generation. The surface of the floating unit can also be used as accommodation for people
In some embodiments it is conceivable to use an old semi rig to test lifting capacity on the rig and test the generators.

Even if the shown embodiments have arranged most technical features on the floating unit, it is equally possible to place some of these on the sea bed. The main inventive idea is to provide an arrangement on the sea bed connected to a floating unit by means of hydraulic two-way cylinders, where pressure generated in the cylinders, when the sea passes from high tide to low tide and back, is used to generate electricity.

## Claims

1. An offshore power generating assembly comprising a floating unit (1), at least one generator (2) being arranged on the floating unit (1), a base (4) connected to the seabed below the floating unit (1) and a number of double acting cylinders (5), comprising a pair of cylinder spindles (10), the spindles (10) being attached to a piston (14), the piston separating an upper and a lower fluid chamber (13) within a cylinder barrel of the cylinder (5) the cylinders (5) being connected operatively between the floating unit (1) and the base (4) so that fluid is compressed within the upper chamber of the cylinder barrel when the tide is moving the floating unit upwards and fluid is compressed within the lower chamber of the cylinder barrel when the tide is moving the floating unit downwards, **characterised in that** the base (4) is a plate having flexible cylinder joints on its upper side, that a number of cylinders are connected in serial relationship between the plate (4) and the floating unit (1), that the compressed fluid is air, and that the compressed air is transferred to an air reservoir providing power to the at least one generator (2).

2. An offshore assembly according to claim 1, wherein the cylinders are pivotably and removably connected to the floating unit (1) and base (4).

3. An offshore assembly according to claim 1 or 2, wherein the base (4) and floating unit (1) each comprises a number of anchoring means (8) for anchoring of cylinders (5) to the base (4) and floating unit.

4. An offshore assembly according to claim 3, wherein the end sections (11) of the cylinder spindles (10) of each cylinder (5) are bow shaped holding a shaft, the shaft being connected to a further bow shaped connecting element (9) comprising another shaft being entered through an aperture in the anchoring means (8) on the base (4).

5. An offshore assembly according to any of the claims 1-4, wherein the floating unit is provided with wind mills and/or solar panels for energy generation.

## Patentansprüche

1. Offshore-Energieerzeugungsanordnung, umfassend eine schwimmende Einheit (1), wobei wenigstens ein Generator (2) auf der schwimmenden Einheit (1) angeordnet ist, eine Basis (4), die mit dem Meeresboden unterhalb der schwimmenden Einheit (1) verbunden ist, und eine Anzahl von doppeltwirkenden Zylindern (5), die ein Paar Zylinderspindeln (10) umfassen, wobei die Spindeln (10) an einem Kolben (14) befestigt sind und der Kolben eine obere und eine untere Fluidkammer (13) innerhalb eines Zylinderrohrs des Zylinders (5) trennt, wobei die Zylinder (5) operativ zwischen der Schwimmeinheit (1) und der Basis (4) wirkverbunden sind, so dass Fluid innerhalb der oberen Kammer des Zylinderrohrs komprimiert wird, wenn die Tide die Schwimmeinheit nach oben bewegt und Fluid innerhalb der unteren Kammer des Zylinderrohrs komprimiert wird, wenn die Tide die Schwimmeinheit nach unten bewegt, **dadurch gekennzeichnet, dass** die Basis (4) eine Platte mit flexiblen Zylindergelenken auf ihrer Oberseite ist, dass eine Anzahl von Zylindern in Reihe zwischen der Platte (4) und der Schwimmeinheit (1) verbunden sind, dass das komprimierte Fluid Luft ist und dass die komprimierte Luft zu einem Luftbehälter überführt wird, der den wenigstens einen Generator (2) mit Energie versorgt.

2. Offshore-Anordnung nach Anspruch 1, wobei die Zylinder schwenkbar und lösbar mit der Schwimmeinheit (1) und der Basis (4) verbunden sind.

3. Offshore-Anordnung nach Anspruch 1 oder 2, wobei die Basis (4) und die schwimmende Einheit (1) jeweils eine Anzahl von Verankerungsmitteln (8) zum Verankern von Zylindern (5) an der Basis (4) und der schwimmenden Einheit umfassen.

4. Offshore-Anordnung nach Anspruch 3, wobei die Endabschnitte (11) der Zylinderspindeln (10) jedes Zylinders (5) bogenförmig ausgebildet sind und eine Welle halten, wobei die Welle mit einem weiteren bogenförmigen Verbindungselement (9) verbunden ist, das eine weitere Welle umfasst, die durch eine Öffnung in den Verankerungsmitteln (8) auf der Basis (4) eingesetzt ist.

5. Offshore-Anordnung nach einem der Ansprüche 1-4, wobei die schwimmende Einheit mit Windmühlen und/oder Solarmodulen zur Energieerzeugung bereitgestellt ist.

## Revendications

1. Ensemble de génération d'énergie en mer comprenant une unité flottante (1), au moins un générateur (2) étant agencé sur l'unité flottante (1), une base (4) raccordée au fond marin en dessous de l'unité flottante (1) et un certain nombre de vérins à double effet (5), comprenant une paire de broches de vérin (10), les broches (10) étant fixées à un piston (14), le piston séparant une chambre de fluide supérieure et une chambre de fluide inférieure (13) dans un corps cylindrique du vérin (5), les vérins (5) étant reliés de manière opérationnelle entre l'unité flottante (1) et la base (4) de manière à ce que du fluide soit comprimé dans la chambre supérieure du corps cylindrique lorsque la marée déplace l'unité flottante vers le haut et que du fluide soit comprimé dans la chambre inférieure du corps cylindrique lorsque la marée déplace l'unité flottante vers le bas, **caractérisé en ce que** la base (4) est une plaque comportant des joints de vérin flexibles sur sa face supérieure, de sorte qu'un certain nombre de vérins sont connectés dans une relation en série entre la plaque (4) et l'unité flottante (1), **en ce que** le fluide comprimé est de l'air, et **en ce que** l'air comprimé est transféré vers un réservoir d'air alimentant les au moins un générateur (2).

2. Ensemble en mer selon la revendication 1, dans lequel les vérins sont raccordés de manière pivotante et amovible à l'unité flottante (1) et à la base (4).

3. Ensemble en mer selon la revendication 1 ou 2, dans lequel la base (4) et l'unité flottante (1) comprennent chacune un certain nombre de moyens d'ancrage (8) pour ancrer des vérins (5) à la base (4) et à l'unité flottante.

4. Ensemble en mer selon la revendication 3, dans lequel les sections d'extrémité (11) des broches de vérin (10) de chaque vérin (5) sont en forme d'arc de cercle maintenant un arbre, l'arbre étant relié à un élément de connexion en forme d'arc de cercle supplémentaire (9) comprenant un autre arbre pénétrant à travers une ouverture dans les moyens d'ancrage (8) sur la base (4).

5. Ensemble en mer selon l'une quelconque des revendications 1 à 4, dans lequel l'unité flottante est munie d'éoliennes et/ou de panneaux solaires pour la production d'énergie.
